# EUROPEAN PATENT APPLICATION

(11) **EP 4 703 585 A1**
(43) Date of publication of application: **04.03.2026**
(21) Application number: 25198982.8
(22) Date of filing: 29.08.2025
(51) Int. Cl.: F03D 7/02

(54) **A METHOD FOR CONTROLLING A WIND TURBINE**

(30) Priority: 30.08.2024 IN 202421065745
(71) Applicant: Suzlon Energy Ltd., Gujarat, Ahmedabad 380009 (IN)
(72) Inventor: Hopp, Martin, 18109 Rostock (DE); Arbeiter, Mathias, 18055 Rostock (DE); Seitz-Meyer, Martin, 13187 Berlin (DE); Radlof, Markus, 18055 Rostock (DE)
(74) Representative: Dornbrack, Tino

(57) **Abstract**

A method for controlling a wind turbine, wherein the method comprises the step of:
- receiving at least one input signal
- estimating a resulting rotor-yaw-moment or a needed individual pitch offset or delay yaw-start or a combination of them and
- determining at least one output signal for yawing,
- wherein based on determined at least one output signal, the control device is configured such that:
-- applying an active yaw-counter-torque by individual pitching at certain operation points or
-- applying a phase dependent yaw starting allowance command in that way that introduction of oscillation at yaw-drive are significant reduced or
-- applying active yawing by generating an additional yaw-torque of rotor by individual pitching.

## Description

This application claims the benefit of priority of Indian patent application 202421065745, filed 30th of August 2024, the entire contents of which are incorporated herein by reference.

### FIELD OF INVENTION

The present invention is directed to a method for controlling a wind turbine as well as a controller for a wind turbine.

### BACKGROUND

From prior art several methods for tracking a rotor of a wind turbine are known. The known methods having a step of providing a control signal for the rotor, the control signal for each rotor blade of the rotor represents an individually cyclically adjusted yaw angle of attack component in order to produce a yaw moment generated by wind power for tracking the rotor.

A disadvantage of prior art is that wind turbine rotors induce due to its characteristic and wind turbine design an oscillating moment around vertical yaw-axis, e.g. with dominant 3p-frequency. While yawing-process demanded high torque-moments are additional overlaid with these oscillations and demanded stronger yaw-drives. Moreover, those ongoing oscillations produce higher fatigue of yaw-drive-mechanic and demand a more durable yaw-design.

### OBJECT OF THE INVENTION

An object of present invention is to provide a method for controlling a wind turbine and a control device for controlling a wind turbine, which overcomes above-mentioned disadvantage, especially reducing yaw moments and reducing the fatigue of yaw-drive-mechanic.

### SUMMARY OF THE INVENTION

This object is solved by a method for controlling a wind turbine according to an aspect of the present invention.

The method for controlling a wind turbine comprises the step of:
- receiving at least one input signal
- estimating a resulting rotor-yaw-moment or a needed individual pitch offset or delay yaw-start or a combination of them and
- determining at least one output signal for yawing,
- wherein based on determined at least one output signal, the control device is configured such that:
   -- applying an active yaw-counter-torque by individual pitching at certain operation points or
   -- applying a phase dependent yaw starting allowance command in that way that introduction of oscillation at yaw-drive are significant reduced or
   -- applying active yawing by generating an additional yaw-torque of rotor by individual pitching or a combination thereof.

Advantageously the apply of the active yaw-counter-torque serves compensation or apply of the phase dependent yaw starting serves delay starting not in peak of loads or apply of the active yawing serves support by individual pitching or a combination thereof reduces respectively avoids peak current and/or high loads in yaw drive.

In a preferred embodiment of the method for controlling a wind turbine, the at least one input signal can be rotor angle position, out-of-plane-moment from at least one rotor blade, yaw demand, wind turbine status or wind speed or a combination of them.

**In** a preferred embodiment of the method for controlling a wind turbine, the method comprises the step of reducing yaw moment of dominant 3p-amplitude.

**In** a preferred embodiment of the method for controlling a wind turbine, the method comprises the step of reducing the level of yaw moment.

**In** a preferred embodiment of the method for controlling a wind turbine, the method comprises the step of estimating a horizontal rotor moment.

**In** a preferred embodiment of the method for controlling a wind turbine, the method comprises further the step of estimating yaw-moment offset.

Another aspect of the present invention is directed to a control device for controlling a wind turbine which solves the above-mentioned object.

The control device for controlling a wind turbine comprising
- at least one input element for receiving at least one input signal,
- an estimation element for estimating a resulting rotor-yaw-moment or a needed individual pitch offset or delay yaw-start or a combination of them and
- at least one output element for determining at least one output signal for yawing, wherein based on determined at least one output signal, the control device is configured such that:
   -- applying an active yaw-counter-torque by individual pitching at certain operation points or
   -- applying a phase dependent yaw starting allowance command in that way that introduction of oscillation at yaw-drive are significant reduced or
   -- applying active yawing by generating an additional yaw-torque of rotor by individual pitching.

Another aspect of the present invention to solve the above-mentioned object is directed to a wind turbine.

The wind turbine is characterized by said control device.

Another aspect of the present invention to solve the above-mentioned object is directed to a method for operating a wind turbine.

The method for operating said wind turbine, wherein the controller of the wind turbine is configured to execute said method for controlling said wind turbine.

Another aspect of the present invention to solve the above-mentioned object is directed to a computer program product.

The computer program product comprises instructions which, when executed by one or more computers, cause one or more computers to carry out said method for controlling said wind turbine.

Summing up, to overcome said object a control-feature with the following content is suggested:
(1) force an active yaw-counter-torque by individual pitching at certain operation points (e.g. while yawing) or
(2) generate an phase dependent yaw starting allowance command in that way that introduction of oscillation (resonance) at yaw-drive are significant reduced or
(3) support active yawing by generating an additional yaw-torque of rotor by individual pitching.

Advantageously, the needed individual pitching and yaw-starting-allowance-command will be derived from resulting rotor-yaw-moment calculated out of measured three blade-out-of-plane-moments and rotor-position angle - and by considering wind-speed and other WTG-control-values.

Advantageously this results in:
- reduced demanded yaw-drive-torque,
- reduced size/number of yaw-drive-motors,
- less cost and
- reduce needed oscillation-amplitude as well as
- increase lifetime of yaw-drive-system.

In the present case, a control device can be understood to mean an electrical device that processes sensor signals and, depending on them, outputs control and/or data signals. The control unit can have an interface that can be designed in terms of hardware and/or software. With a hardware-based design, the interfaces can, for example, be part of a so-called system ASIC, which contains a wide variety of functions of the control unit. However, it is also possible that the interfaces are their own integrated circuits or at least partially consist of discrete components. In the case of software-based training, the interfaces can be software modules that are present, for example, on a microcontroller alongside other software modules.

Also advantageous is a computer program product or computer program with program code, which can be stored on a machine-readable carrier or storage medium such as a semiconductor memory, a hard drive memory or an optical memory and for carrying out, implementing and / or controlling the steps of the method according to one of the embodiments described above is used, particularly if the program product or program is executed on a computer or device.

### BRIEF DESCRIPTION OF DRAWINGS

The invention will now be explained in more detail with respect to exemplary embodiments with reference to the enclosed drawings, wherein:
- **Figure 1**: shows a wind turbine;
- **Figure 2**: shows schematic control diagram and
- **Figure 3**: shows detailed control diagram.

The foregoing and other aspects will become apparent from the following detailed description of the invention when considered in conjunction with the accompanying drawing figures.

### DETAILED DESCRIPTION OF THE INVENTION

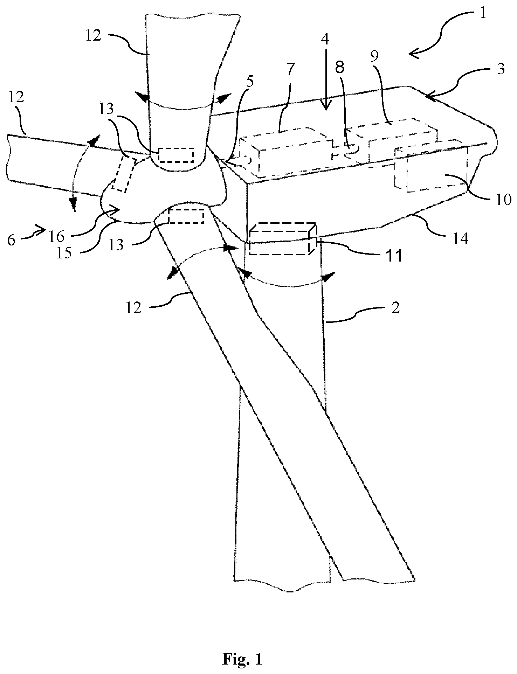

Figure 1 depicts a schematic view of a wind turbine 1 with a tower 2 and a nacelle 3. Depending on given requirements the wind turbine 1 can be used for offshore or onshore applications. The nacelle 3 is rotatable mounted on the tower 2 which is indicated by a double arrow at the tower 2. The nacelle 3 incorporates several components like a drive train chain 4 comprising a rotor shaft 5 (also known as slow-speed-shaft) connecting a rotor 6 with a gear box 7. A high-speed-shaft 8 connects the gear box 7 with a generator 9. The generator 9 is connected to a plurality of electrical components indicated by box 10. Further the nacelle 3 comprises a yaw system 11 for rotating the nacelle 3 indicated by double arrow at tower 2. The rotor 6 comprises three rotor blades 12 which are mounted to a hub body (not shown). Latter is connected to the rotor shaft 5 of the drive train chain 4. The rotor blades 12 are adjustably mounted on the hub body indicated by double arrows at the rotor blade 12. This is realized by means of pitch drives 13, said pitch drives (not shown) being part of a pitch system 13. The pitch system controls the rotor speed to given set points. By means of pitch-drives, the rotor blades 12 may be moved about a rotor blade axis into different pitch positions which is indicated by double arrows at the rotor blade 13. Said rotor blade 6 axis extends in an axial direction of the rotor blades 13. Each rotor blade 13 is connected to the hub body via its blade bearing (not shown). The nacelle 3 is covered by a nacelle cover 14. The hub body is covered by a spinner 15, wherein the hub body and spinner 11 forming a hub 16. Besides other components the electrical components comprise a control device 17.

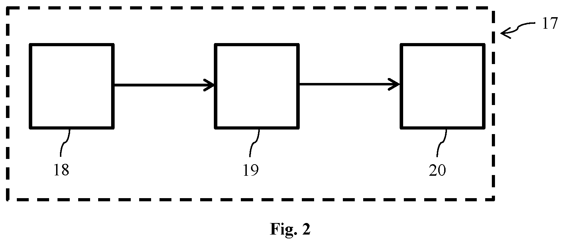

Figure 2 depicts a schematic diagram of the control device 17. This control device 17 comprises an input element 18 and determination element 19 and an output element 20. The input element 18 receives and provides one or more data to the control device 17, namely rotor angle position, out-of-plane-moment of all rotor blades 12, yaw demand, WTG status like production, idling, breaking, starting, waiting for wind etc. and wind speed. In particular, the method for controlling the wind turbine 1 will be executed if the wind turbine 1 is in production state. With output element 20 one or more output signals regarding pitch offset of individual rotor blades 12 and/or yaw command a resulting rotor-yaw-moment, individual pitch offset or delayed yaw-start can be estimated. This reduces the yaw-moment dominant 3p-amplitude. Further the level of yaw-moment is reduced. At the determining element 19 several data will be estimated respectively determined namely moment offset, horizontal rotor moment, split moment and/or yaw start delay. So, the controller 17 is able to apply an active yaw-counter-torque by individual pitching at certain operation points or a phase dependent yaw starting allowance command in that way that introduction of oscillation at yaw-drive are significant reduced or active yawing by generating an additional yaw-torque of rotor by individual pitching.

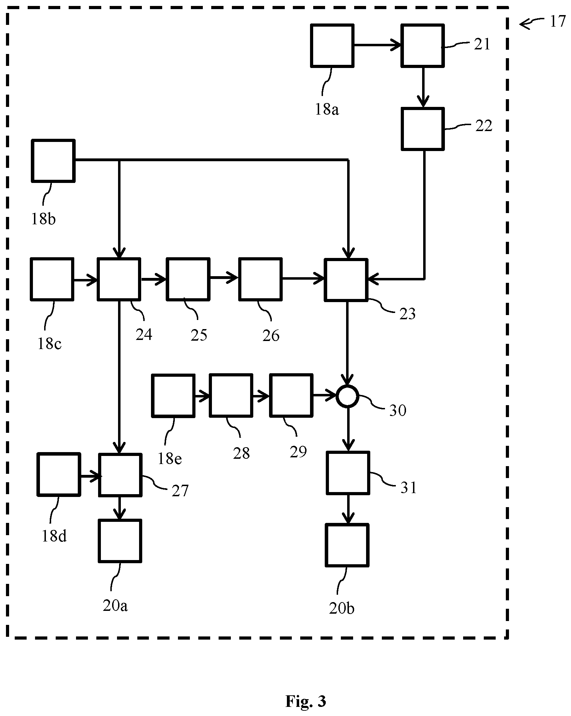

Figure 3 depicts a schematic diagram of the control device 17 according to Fig. 2. With input element 18a the control device 17 receives data regarding wind speed, current yaw demand and status of wind turbine 1. These data are considered for determining yaw-moment support 21. Based on latter the yaw moment offset 22 will be estimated. The estimated yaw moment offset 22 will be provided for determining yaw split moment 23. The yaw moment is a combination of "estimated horizontal rotor moment" and "estimated moment-offset" of all three rotor blades 12. By reference to the rotor position the yaw moment can be split into yaw split moment 23.

With input element 18b the control device 17 receives data regarding rotor angle position. Latter will also be provided for determining yaw split moment 23. At same time the rotor yaw angle position will provided for estimation horizontal rotor moment 24.

With input element 18c of the control device 17 receives data regarding out-of-plane moments of all rotor blades 12. These out-of-plane moments are provided to estimating horizontal rotor moments 24. Latter will be running through a band pass element 25. This band pass element 25 comprises a 3p frequency and bandwidth. Thereafter the data are provided to a sign of delay element 26 comprising a time shift with which the yaw split moment 23 is determined together with the rotor angle position and estimated moment offset 22.

With input element 18d of the control device 17 receives data regarding wind speed, yaw command by controller and wind turbine status. With this data together with estimated horizontal rotor moment 24 a yaw start delay 27 will be estimated, which comprises a dead-phase table. This yaw start delay 27 is provided to the output element 20a comprising yaw command for delayed yaw start.

With input element 18e of the control device 17 receives data regarding wind speed. This wind speed data running through a low-pass-filter element 28 like a 3secAVG to a look-up-table element 29. This lock-up table comprises factors and wind speeds with which a factor for specific wind speeds will be determined. This determined factor together with determined yaw split moment 23 are provided to a multiplication element 30. The multiplied factor and yaw split moments running through an integrator element 31 comprising max limits and min limits for determining a pitch angle offset for individual blades 12 output element 20b. So, the controller 17 is able to apply an active yaw-counter-torque by individual pitching at certain operation points or a phase dependent yaw starting allowance command in that way that introduction of oscillation at yaw-drive are significant reduced or active yawing by generating an additional yaw-torque of rotor by individual pitching.

In result with output signals of pitch offset of individual rotor blade 12 and/or yaw command a resulting rotor-yaw-moment, individual pitch offset or delayed yaw-start or a combination thereof can be estimated. This reduces the yaw-moment dominant 3p-amplitude as can be seen. Further the level of yaw-moment is reduced.

A person skilled in the art would further appreciate that the various illustrative logical blocks, modules, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application.

The various illustrative logical blocks, modules, and algorithms described in connection with the disclosure herein may be implemented or performed with one or more general-purpose processors, a digital signal processor (DSP), cloud computing architecture, an application specific integrated circuit (ASIC), a field programmable gate array (FPGA), programmable logic controller (PLC) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The present disclosure also related to computing systems adapted to carry out any of the methods disclosed herein.

The present disclosure also relates to a computer program or computer program product comprising instructions (code), which when executed, performs any of the methods disclosed herein.

The computer program may be in the form of source code, object code, a code intermediate source and object code such as in partially compiled form, or in any other form suitable for use in the implementation of the processes. The carrier may be any entity or device capable of carrying the computer program.

If implemented in software/firmware, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can comprise RAM, ROM, EEPROM, CD/DVD or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software/firmware is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Bluray disc where disks usually reproduce data magnetically, while discs reproduce data optically with lasers. Combinations of the above should also be included within the scope of computer-readable media.

### LIST OF REFERENCE SIGNS

- 1: wind turbine
- 2: tower
- 3: nacelle
- 4: drive train chain
- 5: rotor shaft
- 6: rotor
- 7: gear box
- 8: high-speed-shaft
- 9: generator
- 10: electrical components
- 11: yaw system
- 12: rotor blades
- 13: pitch system
- 14: nacelle cover
- 15: spinner
- 16: hub
- 17: control device
- 18: input element
- 19: determination element
- 20: output element
- 21: yaw moment support
- 22: yaw moment offset
- 23: yaw split moment
- 24: horizontal rotor moment
- 25: band pass element
- 26: sign of delay element
- 27: yaw start delay
- 28: low pass filter element
- 29: look-up-table element
- 30: multiplication element

## Claims

1. A method for controlling a wind turbine, wherein the method comprises the step of:
- receiving at least one input signal
- estimating a resulting rotor-yaw-moment or a needed individual pitch offset or delay yaw-start or a combination of them and
- determining at least one output signal for yawing,
- wherein based on determined at least one output signal, the control device is configured such that:
-- applying an active yaw-counter-torque by individual pitching at certain operation points or
-- applying a phase dependent yaw starting allowance command in that way that introduction of oscillation at yaw-drive are significant reduced or
-- applying active yawing by generating an additional yaw-torque of rotor by individual pitching.

2. The method for controlling a wind turbine according to claim 1, wherein the at least one input signal can be rotor angle position, out-of-plane-moment from at least one rotor blade, yaw demand, wind turbine status or wind speed or a combination of them.

3. The method for controlling a wind turbine according to claim 1 or 2, wherein reducing yaw moment of dominant 3p-amplitude.

4. The method for controlling a wind turbine according to one of claims 1 to 3, wherein reducing level of yaw moment.

5. The method for controlling a wind turbine according to one of claims 1 to 4, wherein estimating a horizontal rotor moment.

6. The method for controlling a wind turbine according to one of claims 1 to 5, wherein estimating yaw-moment offset.

7. A control device for controlling a wind turbine comprising
- at least one input element for receiving at least one input signal,
- an estimation element for estimating a resulting rotor-yaw-moment or a needed individual pitch offset or delay yaw-start or a combination of them and
- at least one output element for determining at least one output signal for yawing, wherein based on determined at least one output signal, the control device is configured such that:
-- applying an active yaw-counter-torque by individual pitching at certain operation points or
-- applying a phase dependent yaw starting allowance command in that way that introduction of oscillation at yaw-drive are significant reduced or
-- applying active yawing by generating an additional yaw-torque of rotor by individual pitching.

8. A wind turbine **characterized by** a control device according to claim 7.

9. A method for operating a wind turbine according to claim 8, wherein the controller of the wind turbine is configured to execute a method according to claim 1.

10. A computer program product comprising instructions which, when executed by one or more computers, cause the one or more computers to carry out the method of claim 1.
